# EUROPÄISCHE PATENTANMELDUNG

(11) **EP 1 965 180 A1**
(43) Veröffentlichungstag der Anmeldung: **03.09.2008**
(21) Anmeldenummer: 08101194.2
(22) Anmeldetag: 01.02.2008
(51) Int. Cl.: G01F 15/00, G01F 15/06, G01D 4/02

(54) **Verfahren zur Erkennung einer äusseren Einwirkung auf ein Zählwerk eines Zählers für ein strömendes Medium sowie ein solcher Zähler**

(30) Priorität: 09.02.2007 EP 07102055
(71) Anmelder: GWF MessSysteme AG, 6002 Luzern (CH)
(72) Erfinder: Mettler, Roland, 6010, Kriens (CH)
(74) Vertreter: Blöchle, Hans

(57) **Zusammenfassung**

Bei diesem Zähler für ein strömendes Medium mit einem Zählwerk und einem in einem Messwerkgehäuse (M) angeordneten Messwerk ist das das Zählwerk antreibende Messwerk vom strömenden Medium in Bewegung versetzbar, wobei im Zähler ein Referenzzählwerk vorgesehen ist, mittels welchem eine Beeinträchtigung des Zählwerkes feststellbar ist. Ein unterschiedlicher Zählwerkstand der Zählwerke wird an das Lieferwerk des Mediums übermittelt.

## Beschreibung

Die Erfindung betrifft ein Verfahren zur Erkennung einer äusseren Einwirkung auf ein Zählwerk eines Zählers für ein strömendes Medium sowie ein solcher Zähler gemäss der Definition der Oberbegriffe der unabhängigen Patentansprüche.

Zur Messung von strömendem Medium vorgesehene, mechanische Messgeräte bzw. Zähler mit einem mechanischen Zählwerk zur Anzeige des verbrauchten Volumens, sind aus vielen Veröffentlichungen, aus Normen - beispielsweise aus EN 1359 - und aus der Praxis bekannt. Im Weiteren sind auch mechanische Messgeräte mit elektronischem Zählwerk zur Anzeige des verbrauchten Volumens bekannt. Ein solches elektronisches Zählwerk ist beispielsweise offenbart in der Schrift WO 2005/047828 A1.

In den bekannten Messgeräten bzw. Zählern mit mechanischem Zählwerk zur Messung von Wasser, Gas oder dergleichen, wird das durch eine Leitung strömende Volumen gemessen. Durch das entsprechende, strömende Medium wird im Messwerkgehäuse ein primäres Element in eine Drehbewegung versetzt. Diese Drehbewegung wird in der Folge auf ein ausserhalb des Messwerkgehäuses befindliches sekundäres Element übertragen. Primäres und sekundäres Element bilden eine Magnetkupplung. Die erzeugte Drehbewegung ist proportional zum gemessenen Volumen und wird mittels eines Getriebes auf ein Zählwerk mit Zahlenrollen und Schaltritzeln übertragen, wobei die Zahlenrollen das gemessene Volumen anzeigen. Ein Messwerk mit Magnetkupplung und Getriebe ist beispielsweise mit der Schrift EP 1 248 080 A1 offenbart worden, ein Rollenzählwerk für ein Messgerät für Wasser ist beispielsweise offenbart mit der Schrift DE 2244404A1. Das Getriebe besteht beispielsweise aus einem Zahnrad mit Schnecke und einem Schneckenrad, das über Zahnräder die niederwertigste Zahlenrolle des Zählwerks antreibt. Das Zählwerk wird von einem Zählwerkunterteil und einem Schild umschlossen, wobei beide Elemente mechanisch miteinander verbunden werden. In der Regel sind die Zahlenrollen durch eine Blende im Schild visuell einsehbar. Im Gegensatz dazu ist das übrige Zählwerk von aussen nicht sichtbar. Über eine Grundplatte werden das Zählwerkunterteil und das Messwerkgehäuse zum kompletten Messgerät verbunden.

Weiter können mechanische Zählwerke, die elektronisch auslesbar sind, Sensoren und Lichtquellen umfassen, wobei diese beispielsweise senkrecht zur Zahlenrollenachse angeordnet sind. Die senkrechte Anordnung von Gray-Code liefernden optoelektronischen Sensoren in Zählwerken ist mit der Schrift EP 0 660 363 B1 offenbart worden. Das Zählwerk weist eine Elektronik auf, vorzugsweise eine Leiterplatte und einen Mikroprozessor umfassend, mit welcher der Zählerstand ausgelesen wird. Der ausgelesene Zählerstand kann in Form eines vordefinierten Protokolls an das Lieferwerk des strömenden Mediums weitergeleitet werden. Ein mechanisches Zählwerk, das sich zur elektronischen Auslesung eignet, ist beispielsweise mit der Schrift EP 0 660 263 B1 offenbart worden.

Bei Versorgungsnetzwerken mit vorwiegend elektronisch auslesbaren Zählern verwaltet beispielsweise ein Netzbetreiber, eine Netzagentur oder eine Verrechnungsgesellschaft die Daten aller Zähler und verteilt die Verbraucherdaten und die Verbrauchsdaten an die Lieferanten. Die Verbraucher haben so die Möglichkeit, den Lieferanten entsprechend der angebotenen Leistung zu wählen und/oder diesen nach Wunsch zu wechseln. Im weiteren Beschreibungsverlauf sind in der Bezeichnung "Lieferwerk des strömenden Mediums" auch Netzbetreiber, Netzagenturen und Verrechnungsgesellschaften miteingeschlossen.

Zum Schutz des mechanischen Zählwerkes sowohl vor Staub und Feuchtigkeit als auch vor mechanischer Beschädigung und anderen äusseren Einflüssen ist vor dem Schild eine geschlossene, ganz oder teilweise transparente Schutzhaube angebracht.

Aufgrund der Bauweise dieser Messgeräte besteht die Gefahr, dass durch äussere Einwirkungen der Zählerstand der Geräte verfälscht werden kann. Bei Messgeräten mit elektronischem Zählwerk ist eine Verfälschung des Zählerstandes beispielsweise durch die Beeinflussung des Impulsgebers möglich.

Bei Messgeräten mit mechanischem Zählwerk besteht hingegen die Gefahr, dass durch die äusseren Einwirkungen auf das Zählwerk die Drehung der Zahlenrollen des Zählwerks beeinflusst wird und die Rollen sodann bremsen beziehungsweise blockieren. So kann beispielsweise eine auf die Schutzhaube einwirkende Kraft, die beispielsweise mittels Gegenständen oder Vorrichtungen erzeugt wird, die Schutzhaube dermassen verbiegen, dass diese wiederum Kraft auf den Schild ausübt. In der Folge kann sich auch der Schild durchbiegen, was allenfalls dazu führt, dass dieser auf die Zahlenrollen des Zählwerks oder auf die Aufhängung der Zahlenrollen einwirkt und so die Zahlenrolle bremst oder blockiert. Mit der Patentanmeldung EP 06123909.1 ist eine Lösung zur elektronischen Erfassung einer Krafteinwirkung auf die Schutzhaube und den Schild zum Patent angemeldet worden, wobei ein Sensor die Durchbiegung der Schutzhaube automatisch erfasst.

Weiter ist es beispielsweise möglich, dass das einwandfreie Funktionieren des Zählwerks aufgrund klimatischer Bedingungen nicht kontinuierlich gewährleistet werden kann. Dies ist beispielsweise dann der Fall, wenn eine Flüssigkeit ins Zählwerk eindringt, die in der Folge aufgrund tiefer äusserer Temperaturen gefriert und so die Zahlenrollen blockiert. Zudem besteht die Möglichkeit, dass das Messgerät höheren Temperaturen ausgesetzt wird, als dies anlässlich der Konstruktion vorgesehen war und sich deshalb die Schutzhaube und der Schild des Zählwerks derart verformen, dass die Zahlenrollen im Zählwerk nicht mehr frei drehen können. Eine zusätzliche Möglichkeit der Beeinträchtigung des Zählwerks besteht beispielsweise darin, dass ein spitzer Gegenstand durch die Schutzhaube und den Schild in das Zählwerk eindringt und die Drehung der Zahlenrollen derart beeinflusst, dass es zur Bremsung beziehungsweise Blockierung der Rollen kommt.

Zudem kann es auch sein, dass eine Beeinträchtigung der Messung durch eine Veränderung der Einbaulage des Messgerätes erfolgt. Dies kann beispielsweise durch Drehung des Messgerätes um die Leitungsachse oder durch eine Verschiebung der Leitung geschehen.

Aufgrund der aus einer derartigen oder aus einer anderen Beeinträchtigung resultierenden Bremsung beziehungsweise Blockierung der Zahlenrollen des Messgerätes oder aufgrund der ungeeigneten Einbaulage des Messgerätes, entspricht das gemessene Volumen nicht mehr dem effektiv durch das Messgerät geströmten Medium. Das verfälschte Messergebnis beziehungsweise das zu wenig gemessene Medium kann so die Sicherheit der Mediumsverteilung beeinträchtigen. Die konkrete Beeinträchtigung des Zählwerks ist dabei lediglich bei einer visuellen Zählerablesung feststellbar.

Angesichts der vorgängig beschriebenen Problematik liegt der vorliegenden Erfindung die Aufgabe zugrunde, ein Verfahren zur Erkennung einer äusseren Einwirkung auf ein Zählwerk eines Zählers für ein strömendes Medium sowie ein solcher Zähler zu schaffen, mittels welchem die Beeinträchtigung des Zählwerkes eines Zählers bzw. Messgerätes, aber auch die ungeeignete Einbaulage des Messgerätes erkennbar bzw. automatisch erfassbar ist.

Die gestellte Aufgabe wird durch die Erfindung gemäss der Definition der unabhängigen Patentansprüchen gelöst.

Die durch die Erfindung erzielten Vorteile sind hauptsächlich darin zu sehen, dass bei automatisch auslesbaren Zählern eine umfassende Überwachung von Einwirkungen auf den Zählwerkstand möglich ist. Die elektronisch erfasste Beeinträchtigung des Messergebnisses kann dann bei der elektronischen Auslesung des Zählwerkstandes an das Lieferwerk des strömenden Mediums übertragen werden. Mit der automatisierten Überwachung des mechanischen Zählwerkstandes kann gegenüber der visuellen Kontrolle des Zählers Personal und Kosten gespart werden.

Zudem können Beeinträchtigungen des Messergebnisses rasch erkannt und daraufhin Sofortmassnahmen ergriffen werden.

Weiter kann durch die automatisierte Überwachung des Zählwerkstandes die Dauer der äusseren Beeinträchtigung exakt ermittelt werden, was wiederum zu einer verbesserten Kostengerechtigkeit und Kostentransparenz führt.

Gemäss vorliegender Erfindung wird als Vergleich zum Messergebnis des Zählers bzw. Messgerätes über ein zusätzliches Referenzmesswerk eine vor äusserer Beeinflussung geschützte Referenzmessung durchgeführt, welche Aufschluss darüber erteilt, ob das Messergebnis des Messgerätes durch eine äussere Beeinträchtigung verfälscht worden ist.

Mit einem zusätzlichen Sensor zur Ermittlung der Einbaulage des Messgerätes kann darüber hinaus eine ungeeignete Einbaulage erkannt werden.

In einer ersten bevorzugten Ausführung erfolgt die Referenzmessung mittels eines Referenzmesswerkes dergestalt, dass vom Antriebsrad des Zählwerkgetriebes, beispielsweise durch ein Schneckenrad, ein Abtrieb auf ein zusätzliches Schrittschaltgetriebe erzeugt wird, welches eine Referenzrolle in Bewegung setzt. Diese Rolle weist dabei dieselbe Schrittfrequenz oder Drehzahl auf wie die erste ausgelesene Zahlenrolle des Rollenpaketes des Zählwerkes. Der Anzeigestand sowohl des Zahlenpaketes des Zählwerks als auch derjenige der Referenzrolle wird elektronisch durch Lichtquellen und Sensoren ausgelesen.

Eine solche elektronische Auslesung ist beispielsweise aus der Schrift EP 0 660 263 B1 bekannt.

Durch den direkten Vergleich beider Messresultate mittels Mikroprozessor ist eine allfällige Verfälschung des Zählerstandes des Messgerätes leicht zu eruieren, sollte doch aufgrund derselben Schrittfrequenz oder Drehzahl beider Rollen, der Stand der ersten ausgelesenen Zahlenrolle des Zählwerkes und der Stand des Referenzzählwerkes identisch sein. Zählwerkstand und Referenzzählwerkstand werden miteinander verglichen und Abweichungen mit Hilfe des Mikroprozessors an das Lieferwerk des Mediums weitergeleitet. Auch kann der Zählwerkstand beider Zählwerke weitergeleitet werden und im Lieferwerk des Mediums verglichen werden. Bei wiederholt unterschiedlichen Zählwerkständen wird das Lieferwerk den betreffenden Zähler vor Ort überprüfen.

Um das Referenzzählwerk sowohl vor Staub und Feuchtigkeit als auch vor mechanischen Einwirkungen zu schützen, ist es in dieser Ausführungsform bevorzugt im Zählwerkgehäuse angeordnet. Dieser Aufbau gewährleistet gleichzeitig, dass das Referenzzählwerk äusserlich nicht zu erkennen ist. Zudem ist hinsichtlich der zuverlässigen Erfassbarkeit der äusseren Einwirkung auf das Zählwerk darauf zu achten, dass der für die Referenzmessung erforderliche Einbau des zusätzlichen Schrittschaltgetriebes und der Referenzrolle separat in einem stabilen, abgeschlossenen Gehäuse vorgenommen wird.

Eine zweite bevorzugte Ausführungsform der Referenzmessung ist dadurch gekennzeichnet, dass die erfindungsgemässe Referenzzählwerk direkt im Messwerkgehäuse des Messgerätes des entsprechenden Mediums anzubringen ist. Dabei wird über das primäre Element der Magnetkupplung und über ein zusätzliches Getriebe, ein Referenzrad angetrieben. Bei einer ersten bevorzugten Ausführungsvariante dreht sich das Referenzrad langsamer als die erste ausgelesene Zahlenrolle des Rollenpaketes des Zählwerkes. In einer zweiten bevorzugten Variante werden die Umdrehungen des Referenzrades mit Hilfe des Mikroprozessors aufsummiert und mit den Umdrehungen und der Position der Zahlenrollen des Zählwerks verglichen.

Der Anzeigestand des Referenzrades im Innern des Messwerkgehäuses wird durch das Gehäuse optoelektronisch, elektromagnetisch oder akustisch ausgelesen und in der Folge mittels Mikroprozessor ausgewertet.

Die optoelektronische Auslesung erfolgt mittels mehreren Reflektorlichtschranken bevorzugt dergestalt, dass durch ein Fenster in der Messwerkgehäusewand, von einer beziehungsweise mehreren ausserhalb des Messwerkgehäuses platzierten Lichtquellen, Licht auf das Referenzrad projiziert wird. Das Referenzrad weist dabei bevorzugt drei Schlitze auf und wird vor einer reflektierenden Scheibe angebracht. Ein solches Rad mit drei Schlitzen ist beispielsweise mit der Schrift EP 0 660 263 B1 bekannt geworden. Durch die Schlitze des Referenzrades trifft das Licht auf die reflektierende Scheibe, die das Licht dann wieder zurückwirft. Mit Hilfe von ebenfalls ausserhalb des Messwerkgehäuses angebrachten Sensoren kann aufgrund der Reflexion des projizierten Lichts, die aktuelle Stellung des Referenzrades ermittelt werden.

Bei der elektromagnetischen Auslesung werden bevorzugt mittels einer durch Wechselstrom angeregten Spule im Zählwerk des Messgerätes elektromagnetische Schwingungen erzeugt. Aufgrund der Schwingungen induziert die Spule eine Spannung, die im Innern des Messwerkgehäuses einen elektrischen Schwingkreis bestehend aus einer Spule und einem Drehkondensator oder mehreren Kondensatoren anregt. Je nach Stellung des Referenzrades wird vom Drehkondensator oder von den verschiedenen Kondensatoren eine andere Eigenfrequenz des Schwingkreises im Messwerkgehäuse eingestellt. Nach dem Abstellen der Anregerfrequenz schwingt der Schwingkreis im Messwerkgehäuse gemäss seiner Eigenfrequenz nach. Durch Ermittlung der Frequenz und der Amplitude dieser durch den Schwingkreis im Messwerkgehäuse zurück induzierten Spannung, kann bestimmt werden, welche Stellung des Drehkondensators im Messwerkgehäuse bzw. welcher der verschiedenen Kondensatoren im Messwerkgehäuse im Schwingkreis geschalten ist. Dies wiederum gibt Auskunft über die Stellung des Referenzrades. In einer anderen bevorzugten Ausführung wird der Schwingkreis durch eine variable Induktivität verändert.

Die akustische Auslesung der Stellung des Referenzrades erfolgt bevorzugt dadurch, dass im Innern des Messwerkgehäuses ein oder mehrere Elemente der erfindungsgemässen Einrichtung in mechanische Schwingungen versetzt werden, diese Schwingungen durch einen ausserhalb des Messwerkgehäuses gelegenen Sensor registriert und mittels Mikroprozessor ausgewertet werden. Ein Drehwinkelsensor auf akustischer Basis ist beispielsweise aus der Schrift DE 2138070 bekannt.

Durch eine Gegenüberstellung diverser, zeitlich parallel erfolgter Auslesungen des Zählerstandes des Zählwerkes und des Standes des Referenzzählwerkes im Messwerkgehäuse kann überprüft werden, ob sich das Referenzrad im Innern des Messwerkgehäuses drehte, ohne dass sich der Zählerstand des Zählwerks änderte. Sollte sich dieser Umstand bewahrheiten, wäre das Ergebnis als Nachweis für eine Bremsung beziehungsweise Blockierung der Zahlenrollen des Zählwerkes zu werten. Abschliessend wird das Resultat der Gegenüberstellung durch den Mikroprozessor an das Lieferwerk des Mediums übermittelt. Auch kann der Zählwerkstand beider Zählwerke weitergeleitet werden und im Lieferwerk des Mediums verglichen werden. Bei wiederholt unterschiedlichen Zählwerkständen wird das Lieferwerk den betreffenden Zähler vor Ort überprüfen.

Zusätzlich zum Referenzählwerk besteht weiter die Möglichkeit, im Messgerät einen Lagesensor anzubringen, welcher eine ungeeignete Einbaulage erkennt, die beispielsweise aus einer Drehung des Messgerätes um die Leitungsachse oder aus einer Verschiebung der Leitung hervorgeht. Folge einer solchen Lageänderung wäre unter anderem, dass das jeweilige Medium durch das Messgerät strömen würde, ohne dass das geflossene Volumen des Mediums entsprechend gemessen werden könnte. Dies würde unweigerlich zu einer Verfälschung des Messergebnisses führen. Zur Erkennung der jeweiligen Einbaulage wird deshalb im Messgerät eine Vorrichtung mit Lagesensor angebracht, mit welcher der Mikroprozessor eine ungünstige Einbaulage erkennen kann. Als Lagesensor kann ein Neigungsmesser wie zum Beispiel aus der DE 3902630 oder ein Neigungsschalter wie zum Beispiel aus der DE 4219823 bekannt oder eine andere geeignete Einrichtung verwendet werden.

Die erfindungsgemässe Einrichtung kann auch für als Zähler arbeitende Messgeräte angewendet werden, die andere Grössen als Volumen messen.

Anhand der beiliegenden Figuren werden die bevorzugten Ausführungsvarianten der vorliegenden Erfindung näher erläutert.

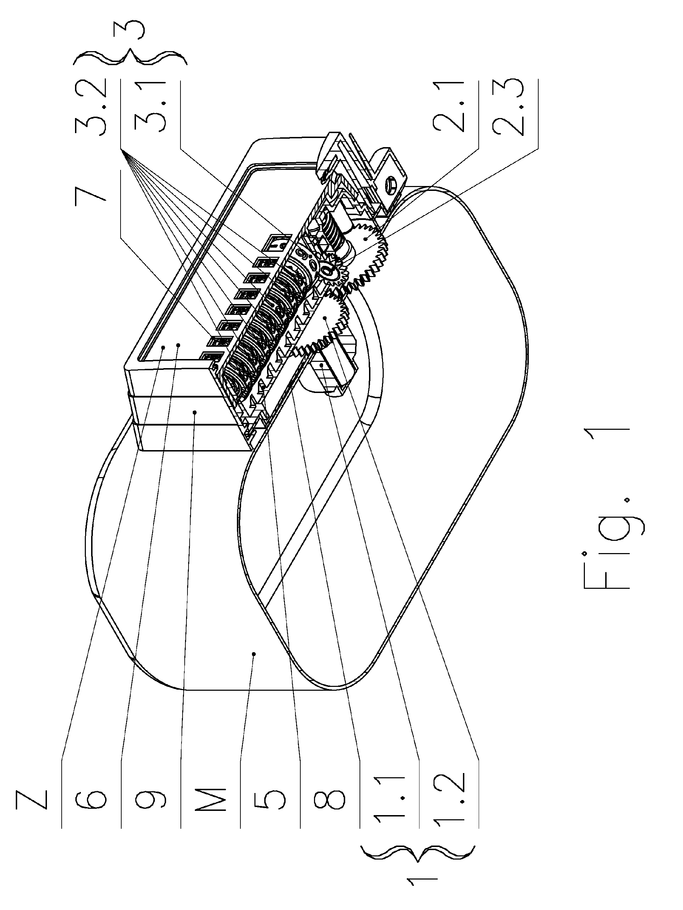

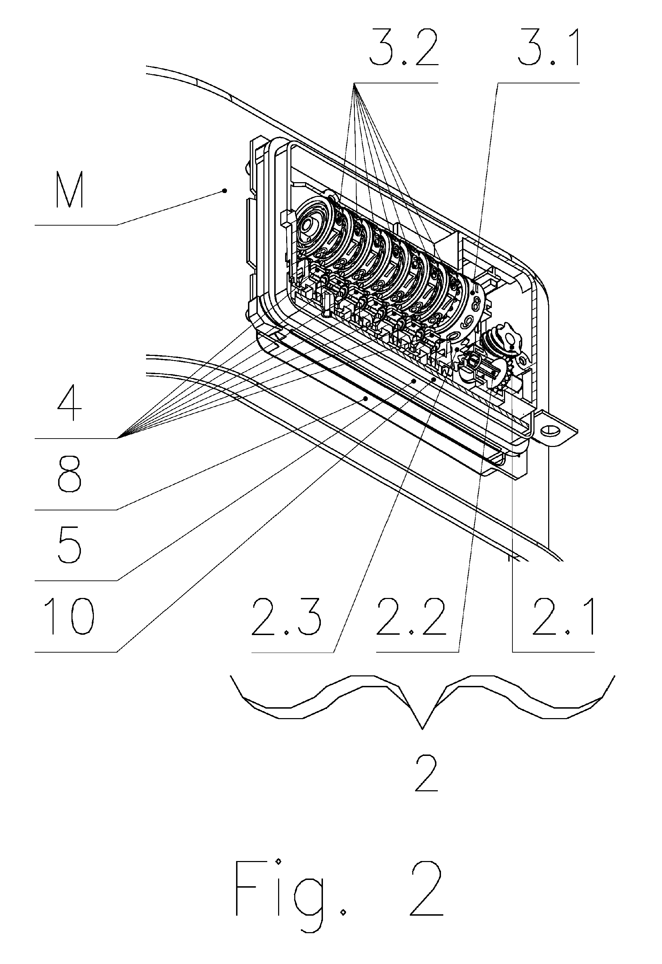

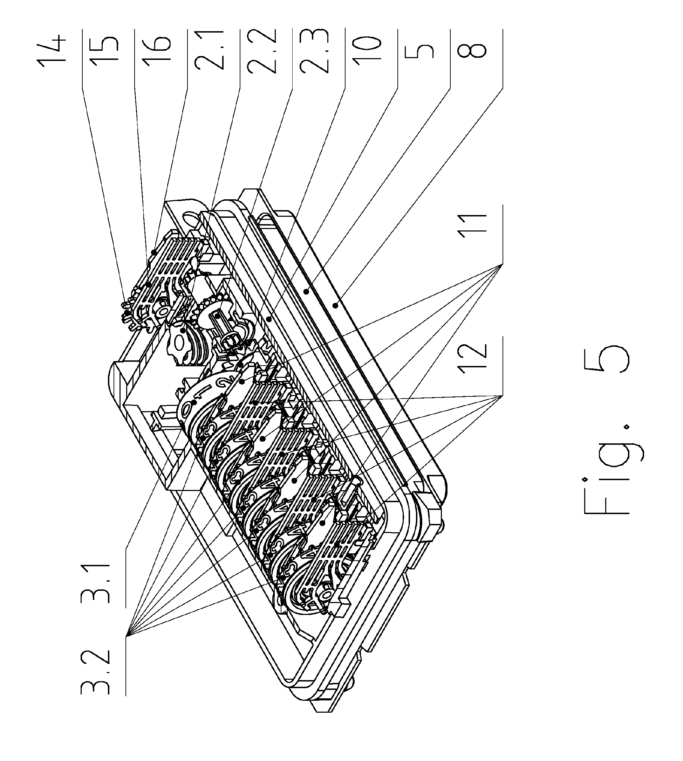

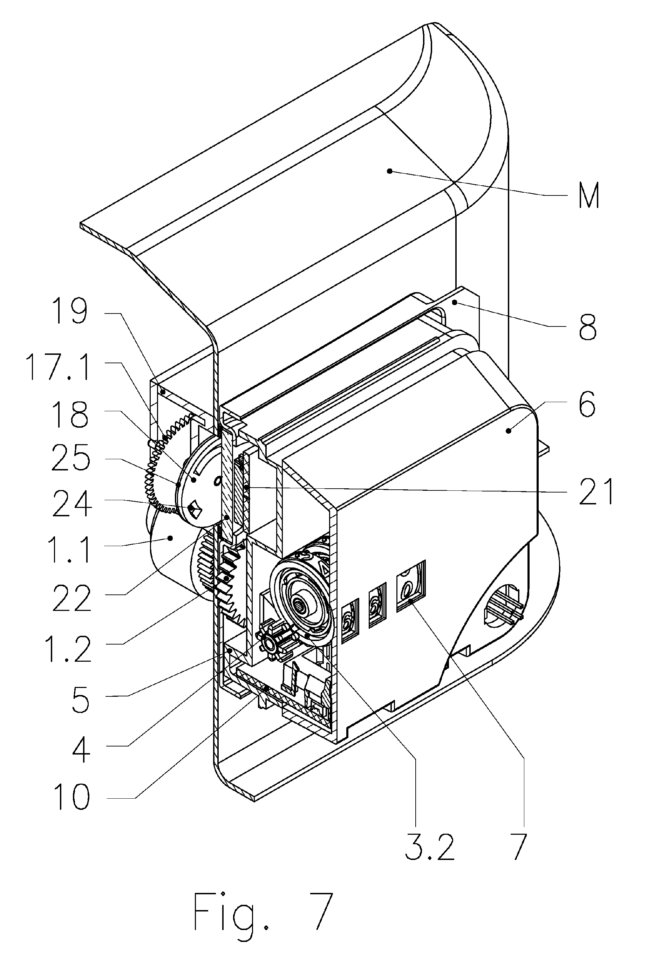

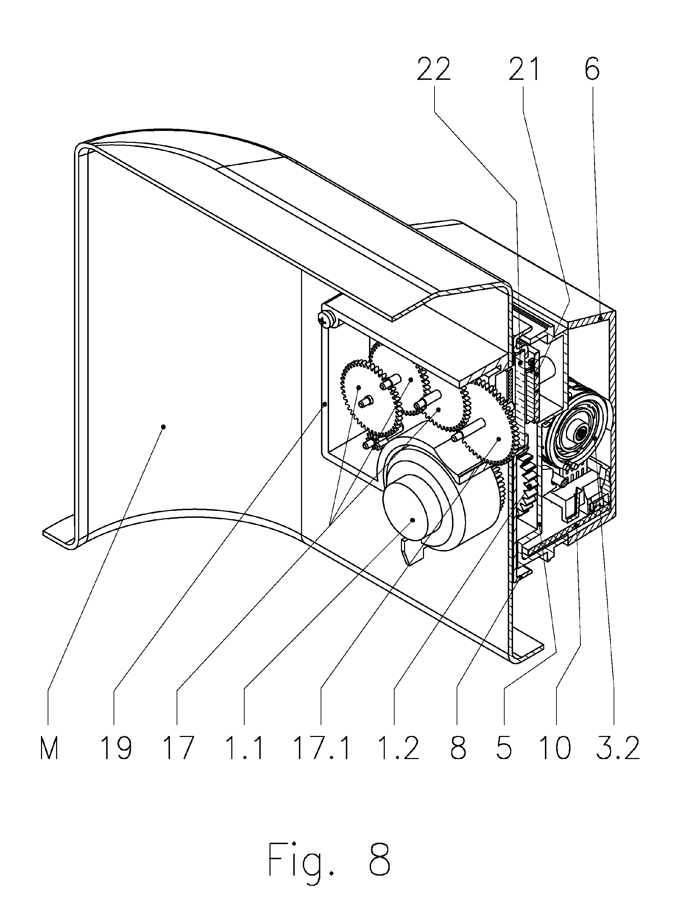

Es zeigen:
Fig. 1
   eine Schnittansicht eines als Zähler arbeitendes Messgerätes für ein strömendes Medium,
Fig. 2
   eine geöffnete Schnittansicht eines Zählwerkes eines Zählers bzw. Messgerätes gemäss Fig. 1,
Fig. 3
   das Zählwerk gemäss Fig. 2 mit einer ersten Variante der in Betracht zu ziehenden Beeinträchtigung, wobei eine äussere Kraft auf das Zählwerk einwirkt,
Fig. 4
   das Zählwerk gemäss Fig. 2 mit einer weiteren Variante der in Betracht zu ziehenden Beeinträchtigung, wobei ein spitzer Gegenstand ins Zählwerk eindringt,
Fig. 5
   das Zählwerk gemäss Fig. 2 mit der ersten Ausführungsvariante, welche mit dem Abtrieb des Schneckenrades auf ein Referenzzählwerk bestehend aus Schrittschaltgetriebe und Referenzrad,
Fig. 6
   das Schrittschaltgetriebe inklusive angetriebenes Referenzrad gemäss Fig. 5 in einer weiteren Ansicht,
Fig. 7 und Fig. 8
   eine Schnittansicht des Zählers bzw. Messgerätes gemäss Fig. 1 mit der zweiten Ausführungsvariante, bei welcher über das primäre Element der Magnetkupplung im Messwerkgehäuse ein Referenzzählwerk bestehend aus Zusatzgetriebe und Referenzrad angetrieben wird, und der ersten Auslesungsvariante, bei welcher die Auslesung optoelektronisch erfolgt,
Fig. 9
   die Einrichtung zur optoelektronischen Auslesung gemäss Fig. 7 und Fig. 8 in einer weiteren Ansicht und
Fig. 10
   einen Schaltplan für die elektromagnetische Auslesung der zweiten Ausführungsvariante.

Fig. 1 und Fig. 2 zeigen ein als Zähler arbeitendes Messgerät für ein strömendes Medium, wie zum Beispiel Gas oder Wasser, mit einem Teil eines Messwerks (nicht dargestellt ist das vom strömenden Medium in Bewegung versetzbare Flügelrad), einem Messwerkgehäuse M und einem Zählwerk Z. Das Zählwerk Z wird vom Messwerkgehäuse M her mittels Magnetkupplung 1 und Getriebe 2 angetrieben. Die Magnetkupplung 1 besteht dabei aus einem primären Element 1.1 und einem sekundären Element 1.2. Das primäre Element 1.1 wird über Messwerk und Flügelrad durch das strömende Medium in Drehbewegung versetzt. Diese Drehbewegung wird auf das ausserhalb des Messwerkgehäuses angeordnete sekundäre Element 1.2 übertragen. Das Getriebe 2 besteht aus einem oder mehreren Zahnrädern mit Schnecke 2.1 und einem Schneckenrad 2.2, das über weitere Zahnräder 2.3 die niederwertigste Zahlenrolle des Rollenpaketes des Zählwerkes 3.1 in Bewegung versetzt.

Ein Messwerk mit Magnetkupplung und Getriebe ist beispielsweise mit der Schrift EP 1 248 080 A1 offenbart worden.

Das Zählwerk Z besteht im wesentlichen aus einer Achse, auf welcher Zahlenrollen 3 drehbar angebracht sind, wobei die niederwertigste Zahlenrolle aus dem Messwerkgehäuse M angetrieben werden kann, sowie aus einer zweiten Achse mit darauf drehbaren Schaltritzeln 4. Mittels der Schaltritzel 4 wird dabei ein Zehntel der Umdrehung einer jeden Zahlenrolle 3 auf die nächst höherwertige Zahlenrolle übertragen. Das Zählwerk Z wird von einem Zählwerkunterteil 5 und einem Schild 6 umschlossen, wobei beide Elemente mechanisch miteinander zu einem Zählwerkgehäuse verbunden werden. Eine Blende 7 im Schild 6 macht den Zählwerkstand einsehbar. Der Schild 6 kann auch eine Beschriftung mit Daten des Zählers tragen. Über eine Grundplatte 8 werden das Zählwerkunterteil 5 und das Messwerkgehäuse M verbunden. Das Zählwerk Z wird zudem durch eine ganz oder teilweise transparente Schutzhaube 9 vor äusseren Einflüssen geschützt.

Das Zählwerk Z weist eine Elektronik auf, vorzugsweise eine Leiterplatte und einen Mikroprozessor umfassend, mit welcher der Zählwerkstand ausgelesen wird. Die zur elektronischen Auslesung des Zählwerkstandes notwendige Einrichtung ist beispielsweise mit der Schrift EP 0 660 263 B1 offenbart worden.

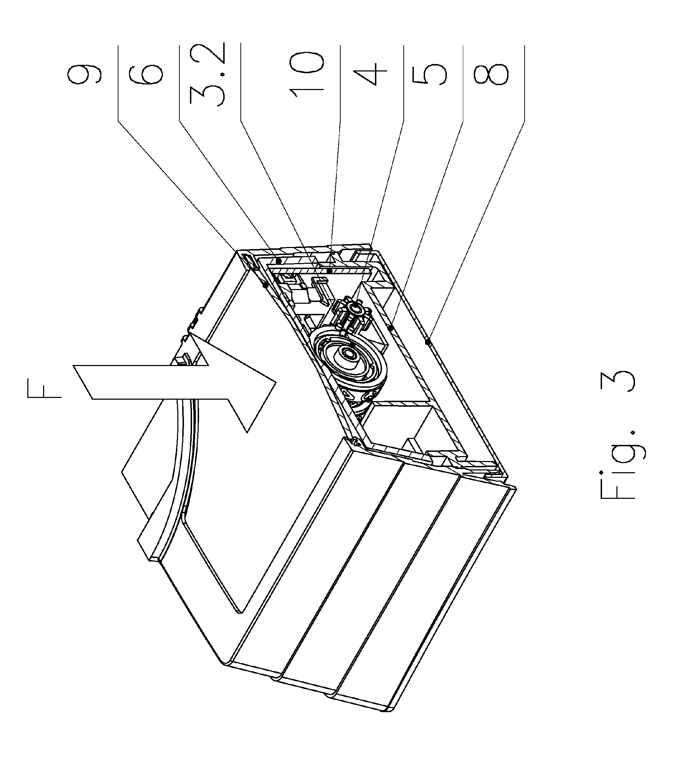

Fig. 3 zeigt das Zählwerk Z gemäss Fig. 2 mit einer der Möglichkeiten, die zu einer Beeinträchtigung des Zählwerks beziehungsweise zur Verfälschung des Zählwerkstandes führen können. So zeigt Fig. 3 das Zählwerk Z mit einer äusseren Krafteinwirkung auf die Schutzhaube 9 und den Schild 6, beziehungsweise mit einer einwirkenden, durch einen Pfeil symbolisierten Kraft F. Die Kraft F erzeugt in der elastischen Schutzhaube 9 eine Durchbiegung, die sich wiederum derart auf den Schild 6 auswirkt, dass auch dieser eine Durchbiegung erfährt. Das hat zur Folge, dass der Schild 6 die Zahlenrollen 3 berührt und diese bremst oder vollständig blockiert.

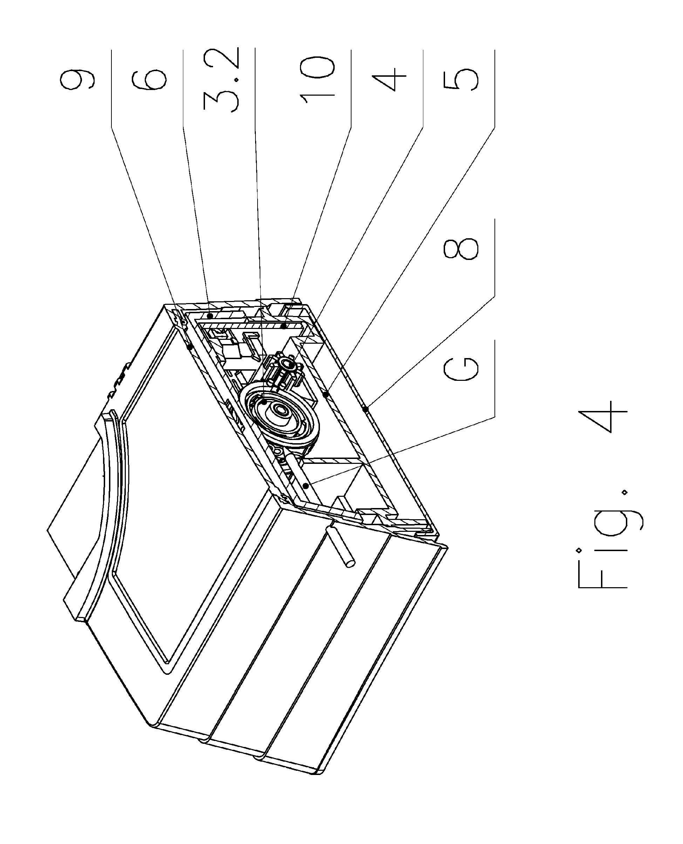

Fig. 4 zeigt das Zählwerk Z gemäss Fig. 2 mit einer weiteren Möglichkeit, die zu einer Beeinträchtigung des Zählwerks beziehungsweise zur Verfälschung des Zählwerkstandes führen kann. Dabei dringt ein spitzer Gegenstand G derart durch die Schutzhaube 9 und den Schild 6 in das Zählwerk, dass es zu einer Beeinflussung der Zahlenrollen 3, das heisst, zu einer Bremsung beziehungsweise Blockierung der Zahlenrollen 3 kommt.

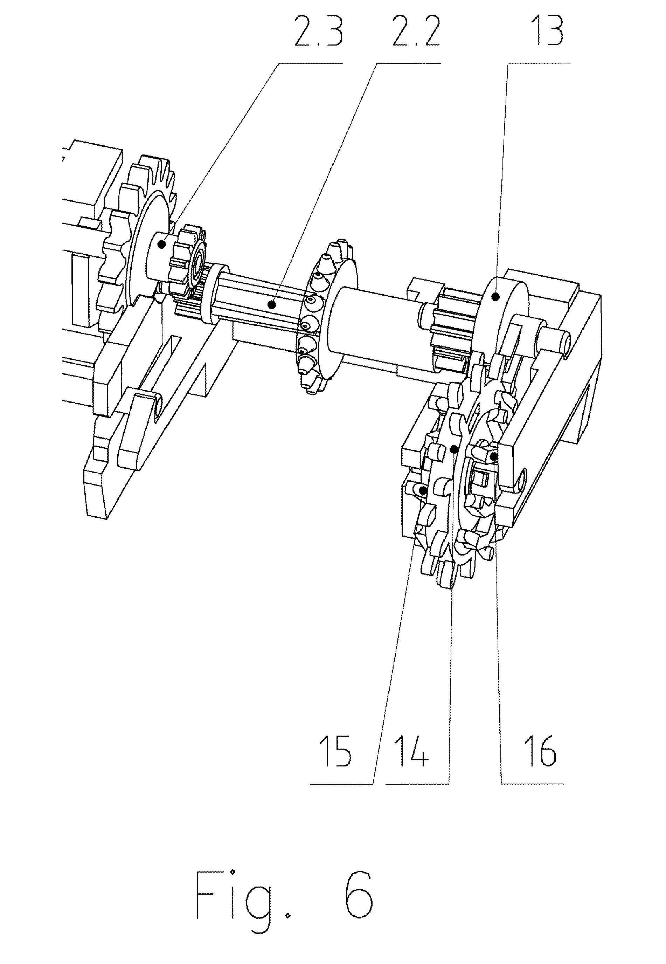

Fig. 5 und 6 zeigen das Zählwerk Z gemäss Fig. 2 mit einer ersten Ausführungsvariante des Referenzzählwerkes bestehend zusätzlichen Rädern zur Erfassung einer Verfälschung des Messergebnisses des Zählwerkstandes.

Das über Magnetkupplung 1 und Zahnrad mit Schnecke 2.1 angetriebene Schneckenrad 2.2 setzt über weitere Zahnräder 2.3 die niederwertigste Zahlenrolle 3.1 der Zahlenrollen des Zählwerks Z in Bewegung. Ein Zehntel der Umdrehung einer jeden Zahlenrolle wird dabei mittels eines Schaltritzels 4 auf die benachbarte Zahlenrolle übertragen. Durch Sensoren 11, Lichtquellen 12 und einer Elektronik, die eine Leiterplatte 10 und einen Mikroprozessor aufweist, wird der jeweilige Zählwerkstand elektronisch ausgelesen. Die zur elektronischen Auslesung des Zählwerkstandes notwendige Einrichtung ist beispielsweise mit der Schrift EP 0 660 263 B1 offenbart worden.

Wie in Fig. 6 gezeigt, erzeugt das Schneckenrad 2.2 parallel zum Antrieb der Zahlenrollen 3 des Zählwerkes Z einen Antrieb des Referenzzählwerkes bestehend aus zusätzlichem Schrittschaltgetriebe 13 und Referenzrolle 14. Das Schrittschaltgetriebe 13 setzt dabei eine einzelne Referenzrolle 14 in Bewegung, wobei diese Rolle 14 dieselbe Schrittfrequenz wie die erste ausgelesene Zahlenrolle des Rollenpaketes des Zählwerkes Z aufweist. Analog zum Zählerstand des Zählwerkes Z kann auch die Referenzrolle 14 elektronisch durch eine Lichtquelle 15 und einen Sensor 16 ausgelesen werden.

Um eine äussere Einwirkung auf das Zählwerk Z beziehungsweise auf die Zahlenrollen 3 des Zählwerkes Z zuverlässig erfassen zu können, ist darauf zu achten, dass der für die Referenzmessung erforderliche Einbau des zusätzlichen Schrittschaltgetriebes 13 und der Referenzrolle 14, vorzugsweise separat in einem unabhängigen, stabilen, abgeschlossenen Gehäuse - also abgekapselt vom restlichen Zählwerk - vorgenommen wird.

Durch das Einwirken auf das Zählwerk Z mittels Kraft, Gegenständen und dergleichen, werden die Zahlenrollen 3 des Zählwerkes Z gebremst oder vollständig blockiert. Eine Blockierung der Zahlenrollen 3 des Zählwerks Z würde sich derart auf das Getriebe des Zählwerks auswirken, dass mit den Zahlenrollen 3 auch die zusätzlichen Zahnräder 2.3 des Getriebes und das Schneckenrad 2.2 blockiert würden. Dies hätte unweigerlich zur Folge, dass mangels Antrieb vom Schneckenrad 2.2 auf das Schrittschaltgetriebe 13 keine Referenzmessung erfolgen könnte. Um eine Blockierung des Schneckenrades 2.2 zu verhindern, ist deshalb darauf zu achten, dass mindestens eine Kupplung, beispielsweise eine Rutschkupplung zwischen dem Schneckenrad 2.2 und der niederwertigsten Zahlenrolle 3.1 des Zählwerkes Z überspringt.

Aufgrund ihrer Lage im abgeschlossenen Gehäuse und dank dem Überspringen der Kupplung im Antrieb des Zählwerks Z, läuft die Referenzrolle 14, trotz äusserer Einwirkungen auf das Zählwerk Z und ungeachtet einer vollständigen Blockierung der Zahlenrollen 3, unbeeinflusst weiter. Eine Referenzmessung ist somit jederzeit möglich. Da sowohl der Zählerstand des Zählwerkes Z als auch der Stand der Rolle der Referenzmessung 14 über die Optoelektronik und den Mikroprozessor ausgelesen werden, ist es in der Folge möglich, beide Messergebnisse direkt miteinander zu vergleichen. Dabei erklärt sich von selbst, dass ein solcher Vergleich nur dann zu bewerkstelligen ist, wenn die Referenzmessung zur gleichen Zeit mit der Auslesung des Zählwerkstandes vorgenommen wird. Aufgrund der aus dem Vergleich ersichtlichen Differenz der Ergebnisse kann so eine Einwirkung auf die Zahlenrollen 3 des Zählwerkes Z nachgewiesen werden.

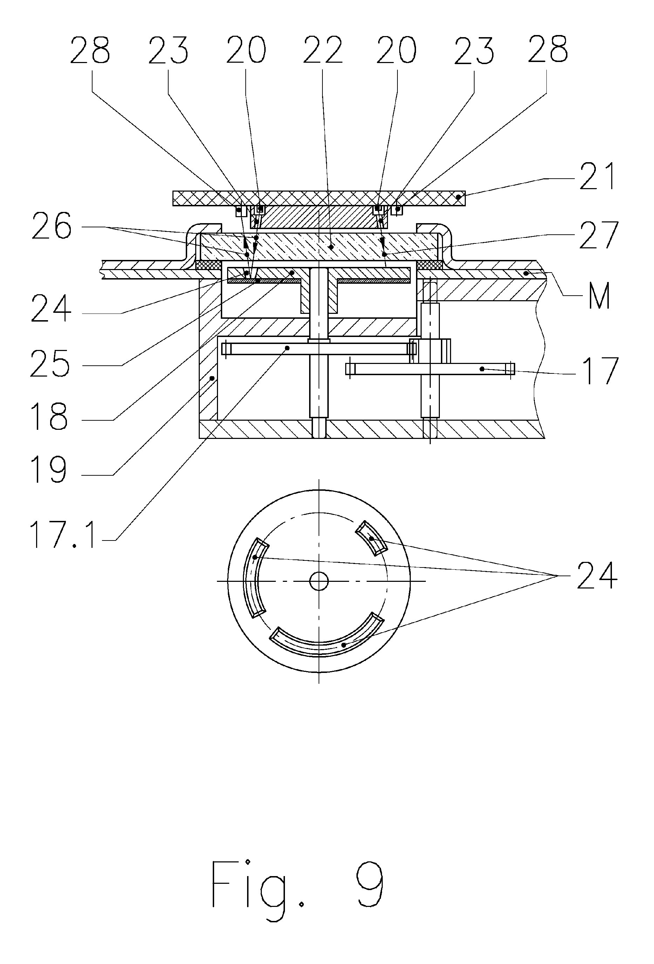

Fig. 7, Fig. 8 und Fig. 9 zeigen das Messgerät gemäss Fig. 1 mit einer weiteren Ausführungsvariante des Referenzzählwerkes bestehend aus zusätzlichen Rädern zur Erfassung einer Verfälschung des Messergebnisses des Zählwerkstandes.

Im Messwerkgehäuse M des Messgerätes wird über das primäre Element 1.1 der Magnetkupplung 1, welches vorzugsweise Verzahnungen aufweist, ein zusätzliches Getriebe angetrieben. Das Getriebe besteht dabei aus mehreren Zahnrädern 17, wobei das letzte Zahnrad 17.1 ein zusätzliches Referenzrad 18 in Bewegung setzt, welches sich in einer bevorzugten Ausführungsvariante langsamer dreht als die erste ausgelesene Zahlenrolle 3.1 des Zählwerkes Z. Die Zahnräder des Referenzradgetriebes 17 und das Referenzrad 18 selber sind bevorzugt in einem Gehäuse 19 angeordnet, welches innerhalb des Messwerkgehäuses M befestigt ist.

Die Auslesung des Referenzrades 18 erfolgt in einer ersten Ausführungsvariante bevorzugt dergestalt, dass der Anzeigestand optoelektronisch durch das Messwerkgehäuse M ermittelt wird. Die optoelektronische Auslesung wird dabei vorzugsweise mittels diverser Reflektorlichtschranken vorgenommen, wobei von einer beziehungsweise mehreren Lichtquellen 20, die vorzugsweise an einer zwischen dem Messwerkgehäuse M und dem Zählwerkunterteil 5 platzierten Leiterplatte 21 angebracht sind, Licht auf das Referenzrad 18 projiziert wird. Die Projektion des Lichts erfolgt dabei durch ein Fenster 22 im Messwerkgehäuse M und der dem Fenster vorgelagerten, und mit den entsprechenden Öffnungen versehenen Blende 23. Das Referenzrad 18 weist bevorzugt drei Codierschlitze 24 auf und ist vor einer Reflektorscheibe 25 angebracht. Durch die Codierschlitze 24 des Referenzrades 18 trifft ein Lichtstrahl auf die Reflektorscheibe 25, die den Strahl reflektiert 26. Findet der Lichtstrahl keinen Weg durch die Codierschlitze 24 auf die Reflektorscheibe 25, kommt es zu keiner Reflektion des Strahls 27. Mit Hilfe von Sensoren 28, die ebenfalls an der zwischen dem Messwerkgehäuse M und dem Zählwerk Z gelegenen Leiterplatte 21 angebracht sind, kann unter Berücksichtigung der jeweiligen Reflektion die aktuelle Stellung des Referenzrades 18 ermittelt werden.

Aufgrund der Gegenüberstellung zeitlich parallel vorgenommener Auslesungen des Referenzrades 18 und des Zählerstandes des Zählwerks Z ist es schliesslich möglich, zu ermitteln, ob das Referenzrad 18 im Innern des Messwerkgehäuses M drehte, ohne dass sich der Zählerstand des Zählwerks änderte. Die trotz existenter Rotation des Referenzrades 18 fehlende Bewegung der Zahlenrollen 3 des Zählwerks Z zeigt auf, dass die Zahlenrollen 3 des Zählwerks Z in irgendeiner Art und Weise beeinflusst worden sind.

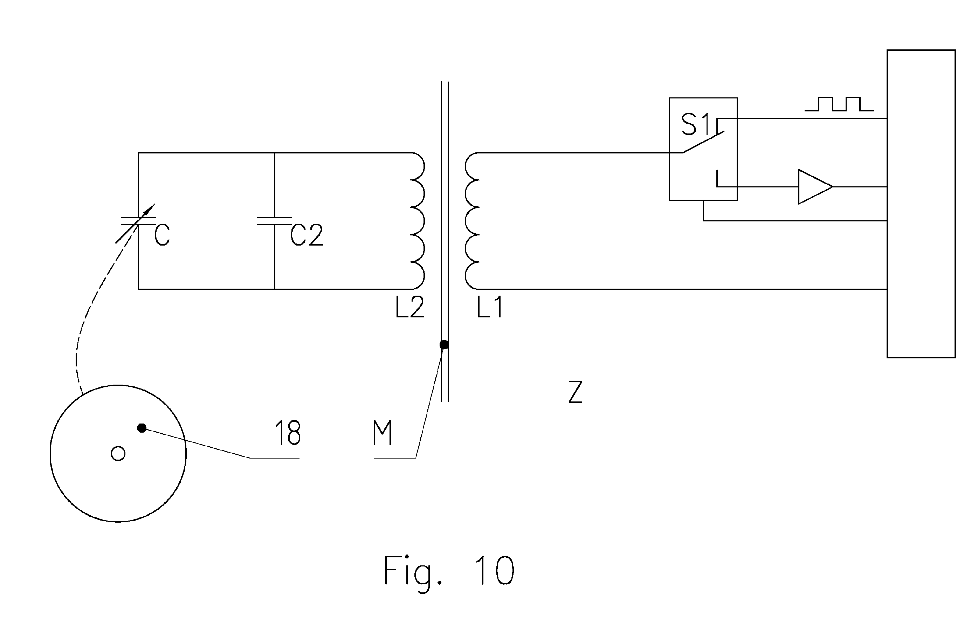

Fig. 10 zeigt in Form eines Schaltplans eine weitere Variante der in Frage kommenden Auslesung des messwerkinternen Referenzrades 18 auf. Es handelt sich dabei um die elektromagnetische Auslesung, bei welcher mittels einer durch Wechselstrom angeregten Spule L1 im Zählwerk Z des Messgerätes elektromagnetische Schwingungen erzeugt werden. Aufgrund der Schwingungen induziert die Spule L1 eine Spannung, die im Innern des Messwerkgehäuses einen elektrischen Schwingkreis bestehend aus einer Spule L2 und einem Kondensator C2 anregt. Je nach Stellung des Referenzrades 18 wird bei einer ersten bevorzugten Ausführungsvariante von einem zusätzlich im Schaltkreis integrierten Drehkondensator C eine andere Eigenfrequenz des Schwingkreises im Messwerkgehäuse M eingestellt. Anstelle eines Drehkondensators sind auch mehrere nebeneinander angeordnete Kondensatoren in Betracht zu ziehen. Eine zweite bevorzugte Ausführungsvariante um eine Modifikation der Eigenfrequenz des Schwingkreises zu erreichen, besteht in der Verwendung einer variablen Induktivität L, welche sich in Abhängigkeit zur Drehung beziehungsweise zur Stellung des Referenzrades 18 ändert.

Nach dem Abstellen der Anregerfrequenz mittels Schalter S1 schwingt der Schwingkreis im Messwerkgehäuse M gemäss seiner Eigenfrequenz nach. Durch Ermittlung der Frequenz und der Amplitude dieser durch den Schwingkreis im Messwerkgehäuse M zurück induzierten Spannung, kann bestimmt werden, welche Stellung der variablen Induktivität L oder des Drehkondensators C, beziehungsweise welcher der verschiedenen Kondensatoren, im Schwingkreis geschalten ist. Dies gibt Auskunft über die Stellung des Referenzrades 18. In der Folge wird mittels Mikroprozessor eine bestimmte Anzahl Auslesungen des Anzeigestandes des Referenzrades 18 zeitlich parallel vorgenommener Auslesungen des Zählerstandes des Zählwerks Z gegenübergestellt.

## Patentansprüche

1. Einrichtung und Verfahren zur Erkennung einer äusseren Einwirkung auf ein Zählwerk Z eines Volumenmessgerätes für ein strömendes Medium umfassend ein Messwerk in einem Messwerkgehäuse M, wobei das das Zählwerk Z antreibende Messwerk vom strömenden Medium in Bewegung versetzbar ist, ***dadurch gekennzeichnet,* dass** ein im Zählwerk angebrachtes Referenzrad vom strömenden Medium mit der gleichen Drehzahl wie die niedrigste Zahlenrolle gedreht wird und dass das Zählwerk über eine Rutschkupplung angetrieben wird.

2. Einrichtung und Verfahren zur Erkennung einer äusseren Einwirkung auf ein Zählwerk Z nach Anspruch 1, ***dadurch gekennzeichnet,* dass** die zusätzlichen Räder zur Referenzmessung im Messwerkgehäuse M angebracht sind.

3. Einrichtung und Verfahren zur Erkennung einer äusseren Einwirkung auf ein Zählwerk Z nach Anspruch 2, ***dadurch gekennzeichnet,* dass** die Messung des Drehwinkels des Referenzrades mittels einer optoelektronischen Einrichtung durch ein transparentes Teil im Messwerkgehäuse M erfolgt.

4. Einrichtung und Verfahren zur Erkennung einer äusseren Einwirkung auf ein Zählwerk Z nach Anspruch 2, ***dadurch gekennzeichnet,* dass** die Messung des Drehwinkels des Referenzrades mittels einer elektromagnetischen Einrichtung umfassend einen Schwingkreis mit einer Induktivität und einer Kapazität mit einer vom Drehwinkel des Referenzrades abhängigen Resonanzfrequenz sowie einer ausserhalb des Messwerkgehäuse M angeordneten Induktivität erfolgt.

5. Einrichtung und Verfahren zur Erkennung einer äusseren Einwirkung auf ein Zählwerk Z nach Anspruch 2, ***dadurch gekennzeichnet,* dass** die Messung des Drehwinkels des Referenzrades mittels einer elektroakustischen Einrichtung umfassend ein oder mehrer Resonanzelemente sowie ein oder mehrere ausserhalb des Messwerkgehäuse M angeordnete Schallerzeuger und Schallsensoren erfolgt.

6. Einrichtung und Verfahren zur Erkennung einer äusseren Einwirkung auf ein Zählwerk Z nach einem der vorhergehenden Ansprüche, ***dadurch gekennzeichnet,* dass** die Differenz zwischen der Änderung des Zählwerkstandes und der Änderung der Referenzmessung in aufeinander folgenden Messungen mittels Mikroprozessor erfassbar ist und an das Lieferwerk des Mediums übermittelbar ist.
